# EUROPEAN PATENT SPECIFICATION

(11) **EP 3 182 202 B1**
(45) Date of publication and mention of the grant of the patent: **24.03.2021**
(21) Application number: 16204575.1
(22) Date of filing: 16.12.2016
(51) Int. Cl.: G03B 15/00, G05D 1/00, H04N 5/232

(54) **SELFIE-DRONE SYSTEM AND PERFORMING METHOD THEREOF**
SELFIE-DROHNENSYSTEM UND DURCHFÜHRUNGSVERFAHREN DAVON
SYSTÈME SELFIE PAR DRONE ET SON PROCÉDÉ DE RÉALISATION

(30) Priority: 18.12.2015 TW 104142830
(43) Date of publication of application: 21.06.2017
(73) Proprietor: National Taiwan University of Science and Technology, 106 Taipei City (TW)
(72) Inventor: LIN, Chyi-Yeu, Taipei City 106 (TW)
(74) Representative: Keil & Schaafhausen Patentanwälte PartGmbB

(56) References cited:
- EP-A2- 3 101 889
- WO-A1-2015/179797
- US-A1- 2010 266 206
- US-A1- 2013 176 423
- US-A1- 2015 350 614

## Description

### TECHNICAL FIELD OF THE INVENTION

The present invention relates to a selfie field, and more particularly to a selfie-drone system and a performing method thereof.

### BACKGROUND OF THE INVENTION

Currently, more and more people utilize drones (dynamic remotely operated navigation equipment) to take photos. When a person taking a selfie (hereinafter referred to as "selfie person") utilizes a drone to perform a selfie, the selfie person controls the drone to take a photo toward the selfie person at a proper height.

Important factors of a selfie photo with satisfactory effect include a position, a distance, and an angle of the selfie person, which appears in the selfie photo. When the selfie person hopes to appear at a right position in the selfie photo, it is required to control a camera disposed in the drone to be moved toward the left of the selfie person. When the selfie person hopes that the selfie person occupies a smaller area in the selfie photo (i.e. the scenery occupies a larger area), it is required to control the camera to be back away or far away from the selfie person. When the selfie person hopes that the selfie person's face orientation is toward the left in the selfie photo, it is required to control the camera to be moved toward the left of the selfie person's face.

In one method for controlling a drone to take a photo, the selfie person can input a height, a positon, and an orientation of the drone in a digital format. Then, the drone can fly to the requested height, position, and orientation. However, because the selfie person cannot view the effect of the selfie photo in advance, the selfie photo taken by the drone at the requested height, position and orientation set can only satisfy the selfie person by chance. Specifically, the selfie person cannot precisely control a position and a size of an image of the selfie person in the selfie photo by simply defining the height, position, and orientation of the drone to take the photo. As a result, the taken selfie photo cannot necessarily achieve the selfie person's expected effect.

In another method for controlling a drone to take a photo, the selfie person manually utilizes a drone controller or a cell phone APP to control the flight of the drone and adjusts the flight of the drone according to the images transmitted from the drone or the position of the selfie person in the images. The manual control commands usually include six flight modes: Up, Down, Forward, Backward, Left and Right. After the selfie person is satisfied with the images transmitted from the drone, the selfie person controls the drone to take the photo. In the method, the selfie person needs to spend a large amount of time on iteratively viewing the images and then control the flight of the drone in a non-intuitive method. The method is inconvenient and inefficiency. It is noted that controlling the flight of the drone to adjust the image of the selfie person to show at an ideal position, an ideal size, and an ideal orientation (angle) in the photo is difficult, non-intuitive, and time consuming.

For the drone to record selfie movies in an automated manner, many drone companies offer options such as Follow me, Lead, Circle, Loop, and Side. These options will be executed by embedded control programs which will always create the identical recorded video effects with same relative distance, height and angle between the drone and the person to be recorded. The drone user cannot ask the drone to make the video recording in a specific way to his preference. Therefore, the current drones fail to make video recording according to user defined distance, angle, height, and time duration at each view position. US2015/350614A1, US2010/266206A1, and WO2015/179797A1 are related prior arts for this field. More particularly, US2015/350614A1 discloses apparatus and methods for tracking human subjects, and/or other moving and/or static objects using aerial video data, US2010/266206A1 discloses a method for adjusting a pose of a user at the time of taking self-portrait photographs, and WO2015/179797A1 discloses an unmanned aerial vehicle (UAV) copter for consumer photography or videography.

Consequently, there is a need to solve the above-mentioned problems when the drones are utilized to take photos in the prior art.

### SUMMARY OF THE INVENTION

An objective of the present invention is to provide a selfie-drone system and a performing method thereof which can solve the problems when drones are utilized to take photos in the prior art.

A selfie-drone system in accordance with the present disclosure includes a selfie-drone body; a database; a camera unit disposed in the selfie-drone body; a selecting unit electrically coupled to the database, the database including a plurality of selfie photo templates, the selecting unit utilized for selecting at least one of the selfie photo templates from the database, each of the selfie photo templates including a plurality of selfie parameters, and the selfie parameters including a position and a size of at least one pattern in the corresponding selfie photo template; and a controlling unit electrically coupled to the camera unit and the selecting unit and utilized for receiving the selfie parameters of the at least one of the selfie photo templates selected by the selecting unit, controlling the selfie-drone body based on the selfie parameters by applying image-based servoing techniques to fly to a specific height and a specific angle so that a position and a size of a selfie person taken in a photo or film are the same as the position and the size of the at least one pattern in the corresponding selfie photo template, and controlling the camera unit to take the photo or shoot the film. The selecting unit is further utilized for selecting plural selfie photo templates from the database, and the controlling unit is further setting sequence priorities of the selected selfie photo templates, controlling the selfie-drone body to fly to specific heights and specific angles matching to the selfie parameters of the selected selfie photo templates according to the sequence priorities and the selfie parameters of the selected selfie photo templates, and controlling the camera unit to take photos or shoot a film, wherein the sequence priorities are set according to an estimated shortest-distance flight path of the selfie-drone body.

In the performing method of the selfie-drone system in accordance with the present disclosure, the selfie-drone system comprises a selfie-drone body, a database, a camera unit, a selecting unit, and a controlling unit. The performing method of the selfie-drone system includes: selecting at least one of a plurality of selfie photo templates from a database by the selecting unit, each of the selfie photo templates including a plurality of selfie parameters, and the selfie parameters comprising a position and a size of at least one pattern in the corresponding selfie photo template; receiving the selfie parameters of the at least one of the selfie photo templates by the controlling unit; and controlling the selfie-drone body based on the selfie parameters by applying image-based servoing techniques to fly to a specific height and a specific angle by the controlling unit so that a position and a size of a selfie person taken in a photo or film are the same as the position and the size of the at least one pattern in the corresponding selfie photo template, and controlling the camera unit to take the photo or shoot the film. The performing method of the selfie-drone system further comprises: selecting, by the selecting unit, plural selfie photo templates from the database; setting, by the controlling unit, sequence priorities of the selected selfie photo templates; controlling, by the controlling unit, the selfie-drone body to fly to specific heights and specific angles matching to the selfie parameters of the selected selfie photo templates according to the sequence priorities and the selfie parameters of the selected selfie photo templates; and controlling, by the controlling unit, the camera unit to take photos or shoot a film, wherein the sequence priorities are set according to an estimated shortest-distance flight path of the selfie-drone body.

The selfie person can view the effect of a selfie photo in advance via the selfie-drone system and the performing method thereof in accordance with the present invention.

### BRIEF DESCRIPTION OF THE DRAWINGS

FIG. 1 shows a block diagram of a selfie-drone system in accordance with an embodiment of the present invention.
FIG. 2 shows a flowchart of a performing method of a selfie-drone system in accordance with an embodiment of the present invention.

### DETAILED DESCRIPTION OF THE INVENTION

To make the objectives, technical schemes, and technical effects of the present invention more clear and definite, the present invention will be described in detail below by using embodiments in conjunction with the appending drawings. It should be understood that the specific embodiments described herein are merely for explaining the present invention, and as used herein, the term "embodiment" refers to an instance, an example, or an illustration but is not intended to limit the present invention.

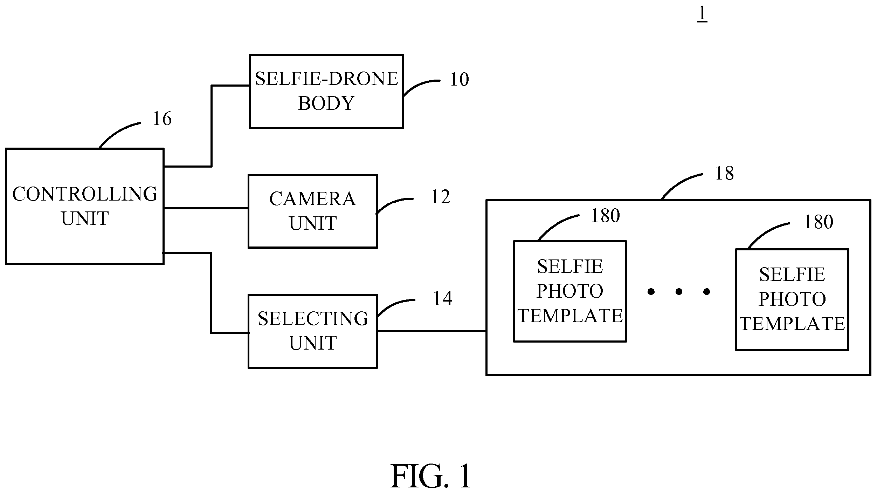

Please refer to FIG. 1. FIG. 1 shows a block diagram of a selfie-drone system 1 in accordance with an embodiment of the present invention.

The selfie-drone system 1 comprises a selfie-drone body 10, a camera unit 12, a selecting unit 14, and a controlling unit 16.

The camera unit 12 is disposed in the selfie-drone body 10 and utilized for taking a picture or shooting a film with respect to a selfie person.

The selecting unit 14 is electrically coupled to a database 18. The database 18 includes a plurality of selfie photo templates 180. The selecting unit 14 is utilized for selecting at least one of the selfie photo templates 180 from the database 18. Each of the selfie photo templates 180 includes a plurality of selfie parameters.

The controlling unit 16 is electrically coupled to the camera unit and the selecting unit and utilized for receiving the selfie parameters of the at least one of the selfie photo templates 180 selected by the selecting unit 14, controlling the selfie-drone body 10 to fly to a specific height and a specific angle matching to the selfie parameters, and controlling the camera unit 12 to take a photo or shoot a film.

In the present invention, the selfie photo templates 180 can be categorized into different classifications. In one embodiment, one of the selfie photo templates 180 can be a one-person template. The one-person template means that a template comprises a pattern. The pattern can be a portrait pattern, a vehicle pattern, and so on. When the selfie person selects the one-person template, the controlling unit 16 receives the selfie parameters of the one-person selfie photo templates, controls the drone body 10 to fly to a specific height and a specific angle matching to the selfie parameters, and controls the camera unit 12 to take a photo or shoot a film. The position and the size of the selfie person in the taken photo are the same as those of the pattern in the one-person template. That is, in the present embodiment, the selfie parameters of each of the selfie photo templates 180 comprises the position and the size of the pattern in the corresponding selfie photo template 180.

In another embodiment, the selfie parameters of each of the selfie photo templates 180 comprises an orientation angle of a portrait pattern (for example, a face orientation angle) in the corresponding selfie photo template. In yet another embodiment, the selfie parameters of each of the selfie photo templates 180 comprises at least one of the positions, the sizes, and the orientation angles of a plurality of patterns (for example, a multi-person template comprising a plurality of patterns) in the corresponding template.

In the selfie-drone system in accordance with the present invention, the visual servoing techniques are applied to control the selfie-drone body 10 to fly to a specific height and a specific angle matching to the selfie-drone body 10. Specifically, the selfie-drone system in accordance with the present invention adopts the imaged-based visual servoing (IBVS) techniques. That is, a specific position of a characteristic mark of an object with a specific size in a photo is selected in advance (i.e. a selfie photo template is selected). The controlling unit 16 continuously adjusts the position and the attitude of the selfie-drone body 10 according to the size and the position of the characteristic mark of the selected object appearing in a screen of the camera unit 12. The position and the attitude of the selfie-drone body 10 are adjusted, so that the image of the selfie person is positioned in the specific position in the photo. As mentioned above, the characteristic mark of an object can be a position, a size, or an orientation angle of the object. For example, the visual servoing techniques can detect the position, the size, or the face orientation angle.

In one embodiment, the selfie photo templates 180 in the database 18 can be stored in a mobile terminal, such as a mobile phone, a tablet, and so on. The selfie person can view and select the selfie photo templates 180 through a display panel of the mobile terminal.

In another embodiment, the selfie photo templates 180 in the database 18 can be stored in the controlling unit 16. The selfie person can view and select the selfie photo templates 180 through a display panel electrically coupled to the controlling unit 16. In one embodiment, the selfie photo templates can be stored in the database 18 in advance.

In another embodiment, when the selfie person is not satisfied with the selfie photo templates 180, the selfie person can upload a photo with satisfying selfie effect to the controlling unit 16. Then, the controlling unit 16 can convert the photo into a selfie photo template 180 to acquire the selfie parameters and store the selfie photo template 180 in the database 18. That is, the selfie person can create a selfie photo template 180 manually and store it in the database 18.

Furthermore, the selecting unit 14 can select plural selfie photo templates 180 from the database 18. The controlling unit 16 receives the selfie parameters of the selected selfie photo templates 180, controls the selfie-drone body 10 to fly to the specific heights and the specific angles matching to the selfie parameters according to the selection sequence of the selected selfie photo templates 180 and the selfie parameters, and controls the camera unit 12 to take photos or shoot a film.

In another embodiment, the controlling unit 16 sets sequence priorities of the selected selfie photo templates 180, controls the selfie-drone body 10 to fly to the specific heights and the specific angles matching to the selfie parameters according to the sequence priorities and the selfie parameters, and controls the camera unit 12 to take photos or shoot a film. The sequence priorities are set according to the shortest distance of the flight path. The shortest distance of the flight path is the shortest flight distance of the selfie-drone body 10 to travel one after one to all estimated photo taking positions of all selected selfie photo templates in a particular sequence.

Although the imaged-based visual servoing (IBVS) techniques perform automatic motion control on the selfie-drone body 10 according to a position and a size of an object in a photo (i.e. the selfie parameters), the relationships of different positions and sizes (i.e. the selfie parameters) of the object appearing in one selfie photo template 180 and relative positions of the camera unit 12 can be derived in advance. As a result, when plural selfie photo templates 180 are selected, required relative positions of the camera unit 12 can be calculated based on the selfie parameters of the selfie photo templates 180. Then, the shortest flight distance is set according to the required relative positions, so that the traveling distance which is required when the selfie-drone system 1 finishes taking photos according to all of the selected selfie photo templates 180 is the shortest.

Furthermore, the selfie person can select plural selfie photo templates 180 from the database 18 with the selecting unit 14 and can set a time duration of each of the selected selfie photo templates 180 with the selecting unit 14. The controlling unit 16 receives the selfie parameters of the selected selfie photo templates 180, controls the selfie-drone body 10 to fly to specific the heights and the specific angles matching to the selfie parameters of the selected selfie photo templates 180 according to the selfie parameters of the selected selfie photo templates 180 and the time duration of each of the selected selfie photo templates 180, and controls the camera unit 12 to shoot films. Finally, the controlling unit 16 combines the films corresponding to the selected selfie photo templates 180 into a new film.

Furthermore, when somebody or some people appear in the background of the selfie person, the selfie-drone system 1 might be disrupted and cannot recognize who the selfie person is. The selfie-drone system 1 can adopt the visual recognition techniques to determine who the selfie person is in a multi-person template. For example, the selfie person performs a specific action (e.g. a gesture) after the selfie person selects the multi-person template. By adopting the visual servoing techniques, the controlling unit 16 can recognize the action to determine the selfie person and control an image of the selfie person to be displayed in a specific position of a taken photo according to the selfie parameters of the multi-person template.

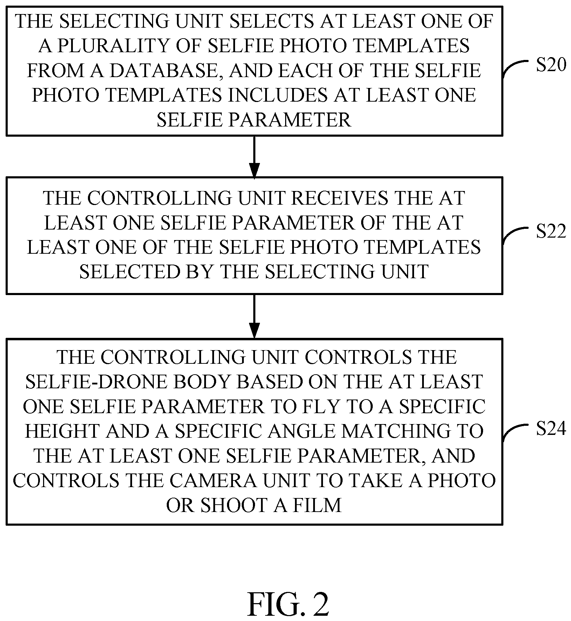

Please refer to FIG. 2. FIG. 2 shows a flowchart of a performing method of a selfie-drone system in accordance with an embodiment of the present invention.

The selfie-drone system comprises a selfie-drone body, a camera unit, a selecting unit, and a controlling unit. The performing method of the selfie-drone system comprises the following steps.

In step S20, the selecting unit selects at least one of a plurality of selfie photo templates from a database. Each of the selfie photo templates includes a plurality of selfie parameters.

In one embodiment, the selfie parameters of each of the selfie photo templates comprises a positon and a size of at least one pattern in the corresponding selfie photo template. In another embodiment, the selfie parameters of each of the selfie photo templates comprises an orientation angle of a portrait pattern (for example, a face orientation angle) in the corresponding selfie photo template.

In yet another embodiment, at least one of the selfie photo templates is created by converting a photo which is uploaded to the selfie-drone system.

Furthermore, the selfie photo templates can be stored in a mobile terminal or the controlling unit.

In step S22, the controlling unit receives the selfie parameters of the at least one of the selfie photo templates selected by the selecting unit.

In step S24, the controlling unit controls the selfie-drone body based on the selfie parameters to fly to a specific height and a specific angle matching to the selfie parameters, and controls the camera unit to take a photo or shoot a film.

In one embodiment, the selfie-drone system can adopt the visual recognition techniques to determine who the selfie person is in a multi-person template. For example, the selfie person performs a specific action (e.g. a gesture) after the selfie person selects the multi-person template. By adopting the visual servoing techniques, the controlling unit can recognize the action to determine the selfie person and control an image of the selfie person to be displayed in a specific position of a taken photo according to the selfie parameters of the multi-person template.

In one embodiment, the selecting unit selects plural selfie photo templates from the database in step S20. The controlling unit controls the selfie-drone body to fly to the specific heights and the specific angles matching to the selfie parameters according to the selection sequence of the selected selfie photo templates and the selfie parameters and controls the camera unit to take photos or shoot a film in step S24.

In another embodiment, the selecting unit selects plural selfie photo templates from the database in step S20. The controlling unit sets sequence priorities of the selected selfie photo templates, controls the selfie-drone body to fly to the specific heights and the specific angles matching to the selfie parameters according to the sequence priorities and the selfie parameters of the selected selfie photo templates, and controls the camera unit to take photos or shoot a film in step S24. The sequence priorities are set according to a shortest-distance flight path of the selfie-drone body.

In yet another embodiment, the selecting unit selects plural selfie photo templates from the database and sets a time duration of each of the selected selfie photo templates in step S20. The controlling unit controls the selfie-drone body to fly to the specific heights and the specific angles matching to the selfie parameters of the selected selfie photo templates according to the selfie parameters of the selected selfie photo templates and the time duration of each of the selected selfie photo templates, controls the camera unit to shoot films, and combines the films corresponding to the selected selfie photo templates into a new film.

The selfie person can view effect of a selfie photo in advance via the selfie-drone system and the performing method thereof in accordance with the present invention.

## Claims

1. A selfie-drone system (1), comprising:
a selfie-drone body (10);
a database (18);
a camera unit (12) disposed in the selfie-drone body (10);
a selecting unit (14) electrically coupled to the database (18), the database (18) comprising a plurality of selfie photo templates (180), the selecting unit (14) utilized for selecting at least one of the selfie photo templates (180) from the database (18), each of the selfie photo templates (180) comprising a plurality of selfie parameters, and the selfie parameters comprising a position and a size of at least one pattern in the corresponding selfie photo template (180); and
a controlling unit (16) electrically coupled to the camera unit (12) and the selecting unit (14) and utilized for receiving the selfie parameters of the at least one of the selfie photo templates (180) selected by the selecting unit (14), controlling the selfie-drone body (10) based on the selfie parameters by applying image-based servoing techniques to fly to a specific height and a specific angle so that a position and a size of a selfie person taken in a photo or film are the same as the position and the size of the at least one pattern in the corresponding selfie photo template (180), and controlling the camera unit (12) to take the photo or shoot the film,
wherein the selecting unit (14) is further utilized for selecting plural selfie photo templates (180) from the database (18), and the controlling unit (16) is further setting sequence priorities of the selected selfie photo templates (180), controlling the selfie-drone body (10) to fly to specific heights and specific angles matching to the selfie parameters of the selected selfie photo templates (180) according to the sequence priorities and the selfie parameters of the selected selfie photo templates (180), and controlling the camera unit (12) to take photos or shoot a film, wherein the sequence priorities are set according to an estimated shortest-distance flight path of the selfie-drone body (10).

2. The selfie-drone system (1) according to claim 1, wherein the selfie parameters of each of the selfie photo templates (180) comprises an orientation angle of a portrait pattern in the corresponding selfie photo template (180).

3. The selfie-drone system (1) according to claim 1, wherein when the selfie photo template (180) selected by the selecting unit (14) is a multi-person template, the controlling unit (16) is further utilized for determining the selfie person by recognizing an action of the selfie person and controlling an image of the selfie person to be displayed in a specific position of a taken photo according to the selfie parameters of the multi-person template.

4. The selfie-drone system (1) according to claim 1, wherein at least one of the selfie photo templates (180) is created by converting a photo which is uploaded to the selfie-drone system (1), and the at least one created selfie photo template (180) is stored in the database (18).

5. The selfie-drone system (1) according to claim 1, wherein the selfie photo templates (180) are stored in a mobile terminal.

6. The selfie-drone system (1) according to claim 1, wherein the selfie photo templates (180) are stored in the controlling unit (16).

7. The selfie-drone system (1) according to claim 1, wherein the selecting unit (14) is further utilized for selecting plural selfie photo templates (180) from the database (18), and the controlling unit (16) is further controlling the selfie-drone body (10) to fly to specific heights and specific angles matching to the selfie parameters of the selected selfie photo templates (180) according to a selection sequence of the selected selfie photo templates (180) and the selfie parameters of the selected selfie photo templates (180), and controlling the camera unit (12) to take photos or shoot a film.

8. The selfie-drone system (1) according to claim 1, wherein the selecting unit (14) is further utilized for selecting plural selfie photo templates (180) from the database (18) and setting a time duration of each of the selected selfie photo templates (180), and the controlling unit (16) is further utilized for controlling the selfie-drone body (10) to fly to specific heights and specific angles matching to the selfie parameters of the selected selfie photo templates (180) according to the selfie parameters of the selected selfie photo templates (180) and the time duration of each of the selected selfie photo templates (180), controlling the camera unit (12) to shoot films, and combining the films corresponding to the selected selfie photo templates (180) into a new film.

9. A performing method of a selfie-drone system (1), the selfie-drone system (1) comprising a selfie-drone body (10), a database (18), a camera unit (12), a selecting unit (14), and a controlling unit (16), the performing method of the selfie-drone system (1) comprising:
selecting at least one of a plurality of selfie photo templates (180) from the database (18) by the selecting unit (14), each of the selfie photo templates (180) comprising a plurality of selfie parameters, and the selfie parameters comprising a position and a size of at least one pattern in the corresponding selfie photo template (180);
receiving the selfie parameters of the at least one of the selfie photo templates (180) by the controlling unit (16); and
controlling the selfie-drone body (10) based on the selfie parameters by applying image-based servoing techniques to fly to a specific height and a specific angle by the controlling unit (16) so that a position and a size of a selfie person taken in a photo or film are the same as the position and the size of the at least one pattern in the corresponding selfie photo template (180), and controlling the camera unit (12) to take the photo or shoot the film, wherein the performing method of the selfie-drone system (1) further comprises:
selecting, by the selecting unit (14), plural selfie photo templates (180) from the database (18);
setting, by the controlling unit (16), sequence priorities of the selected selfie photo templates (180);
controlling, by the controlling unit (16), the selfie-drone body (10) to fly to specific heights and specific angles matching to the selfie parameters of the selected selfie photo templates (180) according to the sequence priorities and the selfie parameters of the selected selfie photo templates (180); and
controlling, by the controlling unit (16), the camera unit (12) to take photos or shoot a film, wherein the sequence priorities are set according to an estimated shortest-distance flight path of the selfie-drone body (10).

10. The performing method of the selfie-drone system (1) according to claim 9, wherein the selfie parameters of each of the selfie photo templates (180) comprises an orientation angle of a portrait pattern in the corresponding selfie photo template (180).

11. The performing method of the selfie-drone system (1) according to claim 9, wherein when the selfie photo template (180) selected by the selecting unit (14) is a multi-person template, the controlling unit (16) determines the selfie person by recognizing an action of the selfie person and controls an image of the selfie person to be displayed in a specific position of a taken photo according to the selfie parameters of the multi-person template.

12. The performing method of the selfie-drone system (1) according to claim 9, wherein at least one of the selfie photo templates (180) is created by converting a photo which is uploaded to the selfie-drone system (1), and the at least one created selfie photo template (180) is stored in the database (18).

13. The performing method of the selfie-drone system (1) according to claim 9, wherein the selecting unit (14) selects plural selfie photo templates (180) from the database (18), and the controlling unit (16) controls the selfie-drone body (1) to fly to specific heights and specific angles matching to the selfie parameters of the selected selfie photo templates (180) according to a selection sequence of the selected selfie photo templates (180) and the selfie parameters of the selected selfie photo templates (180), and controls the camera unit (12) to take photos or shoot a film.

14. The performing method of the selfie-drone system (1) according to claim 9, wherein the selecting unit (14) selects plural selfie photo templates (180) from the database (18) and sets a time duration of each of the selected selfie photo templates (180), and the controlling unit (16) controls the selfie-drone body (1) to fly to specific heights and specific angles matching to the selfie parameters of the selected selfie photo templates (180) according to the selfie parameters of the selected selfie photo templates (180) and the time duration of each of the selected selfie photo templates (180), controls the camera unit (16) to shoot films, and combines the films corresponding to the selected selfie photo templates (180) into a new film.

## Patentansprüche

1. Ein Selfie-Drohnensystem (1), umfassend:
einen Selfie-Drohnenkörper (10);
eine Datenbank (18);
eine Kameraeinheit (12), die in dem Selfie-Drohnenkörper (10) angeordnet ist;
eine Auswahleinheit (14), die elektrisch mit der Datenbank (18) gekoppelt ist, wobei die Datenbank (18) eine Vielzahl von Selfie-Fotoschablonen (180) umfasst, wobei die Auswahleinheit (14) zum Auswählen von mindestens einer der Selfie-Fotoschablonen (180) aus der Datenbank (18) verwendet wird, wobei jede der Selfie-Fotoschablonen (180) eine Vielzahl von Selfie-Parametern umfasst, und die Selfie-Parameter eine Position und eine Größe von mindestens einem Muster in der entsprechenden Selfie-Fotoschablone (180) umfassen; und
eine Steuereinheit (16), die elektrisch mit der Kameraeinheit (12) und der Auswahleinheit (14) gekoppelt ist und zum Empfangen der Selfie-Parameter der mindestens einen der Selfie-Fotoschablonen (180), die durch die Auswahleinheit (14) ausgewählt wurde, verwendet wird, Steuern des Selfie-Drohnenkörpers (10) basierend auf den Selfie-Parametern durch Anwenden von bildbasierten Servotechniken, um zu einer spezifischen Höhe und einem spezifischen Winkel zu fliegen, so dass eine Position und eine Größe einer Selfie-Person, die in einem Foto oder Film aufgenommen wird, die gleichen sind wie die Position und die Größe des mindestens einen Musters in der entsprechenden Selfie- Fotoschablonen (180), und Steuern der Kameraeinheit (12), um das Foto aufzunehmen oder den Film zu drehen, wobei:
die Auswahleinheit (14) weiterhin dazu verwendet wird, mehrere Selfie-Fotoschablonen (180) aus der Datenbank (18) auszuwählen, und die Steuereinheit (16) weiterhin Sequenzprioritäten der ausgewählten Selfie- Fotoschablonen (180) einstellt, Steuern des Selfie-Drohnenkörpers (10), um zu bestimmten Höhen und bestimmten Winkeln zu fliegen, die zu den Selfie-Parametern der ausgewählten Selfie- Fotoschablonen (180) gemäß den Sequenzprioritäten und den Selfie-Parametern der ausgewählten Selfie-Fotoschablonen (180) passen, und Steuern der Kameraeinheit (12), um Fotos zu machen oder einen Film aufzunehmen, wobei die Sequenzprioritäten gemäß einer geschätzten Flugbahn mit kürzester Entfernung des Selfie-Drohnenkörpers (10) gesetzt werden.

2. Selfie-Drohnensystem (1) nach Anspruch 1, wobei die Selfie-Parameter jeder der Selfie- Fotoschablonen (180) einen Ausrichtungswinkel eines Porträtmusters in der entsprechenden Selfie-Fotoschablonen (180) umfassen.

3. Selfie-Drohnensystem (1) nach Anspruch 1, wobei, wenn die von der Auswahleinheit (14) ausgewählte Selfie-Fotoschablone (180) eine Mehrpersonenschablone ist, die Steuereinheit (16) ferner dazu verwendet wird, die Selfie-Person zu bestimmen, indem sie eine Aktion der Selfie-Person erkennt und ein Bild der Selfie-Person steuert, das in einer bestimmten Position eines aufgenommenen Fotos gemäß den Selfie-Parametern der Mehrpersonenschablone angezeigt werden soll.

4. Selfie-Drohnensystem (1) nach Anspruch 1, wobei mindestens eine der Selfie- Fotoschablonen (180) durch Konvertieren eines Fotos, das auf das Selfie-Drohnensystem (1) hochgeladen wird, erstellt wird und die mindestens eine erstellte Selfie-Fotoschablonen (180) in der Datenbank (18) gespeichert wird.

5. Selfie-Drohnensystem (1) nach Anspruch 1, wobei die Selfie-Fotoschablonen (180) in einem mobilen Endgerät gespeichert sind.

6. Selfie-Drohnensystem (1) nach Anspruch 1, wobei die Selfie- Fotoschablonen (180) in der Steuereinheit (16) gespeichert sind.

7. Selfie-Drohnensystem (1) nach Anspruch 1, wobei die Auswahleinheit (14) weiterhin dazu verwendet wird, mehrere Selfie- Fotoschablonen (180) aus der Datenbank (18) auszuwählen, und die Steuereinheit (16) ferner den Selfie-Drohnenkörper (10) steuert, um zu bestimmten Höhen und bestimmten Winkeln zu fliegen, die zu den Selfie-Parametern der ausgewählten Selfie-Fotoschablonen (180) gemäß einer Auswahlsequenz der ausgewählten Selfie- Fotoschablonen (180) und den Selfie-Parametern der ausgewählten Selfie- Fotoschablonen (180) passen, und die Kameraeinheit (12) steuert, um Fotos aufzunehmen oder einen Film zu drehen.

8. Selfie-Drohnensystem (1) nach Anspruch 1, wobei die Auswahleinheit (14) ferner dazu verwendet wird, mehrere Selfie-Fotoschablonen (180) aus der Datenbank (18) auszuwählen und eine Zeitdauer für jede der ausgewählten Selfie- Fotoschablonen (180) einzustellen, und die Steuereinheit (16) weiterhin zum Steuern des Selfie-Drohnenkörpers (10) verwendet wird, um zu spezifischen Höhen und spezifischen Winkeln zu fliegen, die zu den Selfie-Parametern der ausgewählten Selfie-Fotoschablonen (180) gemäß den Selfie-Parametern der ausgewählten Selfie- Fotoschablonen (180) und der Zeitdauer jeder der ausgewählten Selfie- Fotoschablonen (180) passen, zum Steuern der Kameraeinheit (12), um Filme aufzunehmen, und zum Kombinieren der Filme, die den ausgewählten Selfie- Fotoschablonen (180) entsprechen, zu einem neuen Film.

9. Durchführungsverfahren für ein Selfie-Drohnensystem (1), wobei das Selfie-Drohnensystem (1) einen Selfie-Drohnenkörper (10), eine Datenbank (18), eine Kameraeinheit (12), eine Auswahleinheit (14) und eine Steuereinheit (16) umfasst, wobei das Durchführungsverfahren des Selfie-Drohnensystems (1) umfasst:
Auswählen von mindestens einer aus einer Vielzahl von Selfie-Fotoschablonen (180) aus der Datenbank (18) durch die Auswahleinheit (14), wobei jede der Selfie- Fotoschablonen (180) eine Vielzahl von Selfie-Parametern umfasst und die Selfie-Parameter eine Position und eine Größe von mindestens einem Muster in der entsprechenden Selfie-Fotoschablonen (180) umfassen
Empfangen der Selfie-Parameter der mindestens einen der Selfie- Fotoschablonen (180) durch die Steuereinheit (16); und
Steuern des Selfie-Drohnenkörpers (10) basierend auf den Selfie-Parametern durch Anwenden von bildbasierten Servotechniken, um zu einer spezifischen Höhe und einem spezifischen Winkel durch die Steuereinheit (16) zu fliegen, so dass eine Position und eine Größe einer Selfie-Person, die in einem Foto oder Film aufgenommen wird, die gleichen sind wie die Position und die Größe des mindestens einen Musters in der entsprechenden Selfie-Fotoschablone (180), und Steuern der Kameraeinheit (12), um das Foto aufzunehmen oder den Film zu drehen, wobei das Durchführungsverfahren des Selfie-Drohnensystems (1) ferner umfasst:
Auswählen, durch die Auswahleinheit (14), mehrerer Selfie-Fotoschablone (180) aus der Datenbank (18);
Einstellen von Reihenfolgeprioritäten der ausgewählten Selfie-Fotoschablone (180) durch die Steuereinheit (16);
Steuern, durch die Steuereinheit (16), des Selfie-Drohnenkörpers (10), um zu spezifischen Höhen und spezifischen Winkeln zu fliegen, die zu den Selfie-Parametern der ausgewählten Selfie- Fotoschablone (180) passen, gemäß den Sequenzprioritäten und den Selfie-Parametern der ausgewählten Selfie- Fotoschablone (180); und
Steuern der Kameraeinheit (12) durch die Steuereinheit (16), um Fotos aufzunehmen oder einen Film zu drehen, wobei die Sequenzprioritäten gemäß einer geschätzten Flugbahn des Selfie-Drohnenkörpers (10) mit der kürzesten Entfernung eingestellt sind.

10. Durchführungsverfahren des Selfie-Drohnensystems (1) nach Anspruch 9, wobei die Selfie-Parameter jeder der Selfie-Fotoschablone (180) einen Ausrichtungswinkel eines Porträtmusters in der entsprechenden Selfie-Fotoschablone (180) umfassen.

11. Durchführungsverfahren des Selfie-Drohnensystems (1) nach Anspruch 9, wobei, wenn die von der Auswahleinheit (14) ausgewählte Selfie-Fotoschablone (180) eine Mehrpersonen-Vorlage ist, die Steuereinheit (16) die Selfie-Person durch Erkennen einer Aktion der Selfie-Person bestimmt und ein Bild der Selfie-Person, das in einer bestimmten Position eines aufgenommenen Fotos angezeigt werden soll, gemäß den Selfie-Parametern der Mehrpersonen-Vorlage steuert.

12. Durchführungsverfahren des Selfie-Drohnensystems (1) nach Anspruch 9, wobei mindestens eine der Selfie-Fotoschablone (180) durch Konvertieren eines Fotos erstellt wird, das auf das Selfie-Drohnensystem (1) hochgeladen wird, und die mindestens eine erstellte Selfie- Fotoschablone (180) in der Datenbank (18) gespeichert wird.

13. Durchführungsverfahren des Selfie-Drohnensystems (1) nach Anspruch 9, wobei die Auswahleinheit (14) mehrere Selfie-Fotoschablone (180) aus der Datenbank (18) auswählt, und die Steuereinheit (16) den Selfie-Drohnenkörper (1) so steuert, dass er entsprechend einer Auswahlsequenz der ausgewählten Selfie- Fotoschablone (180) und den Selfie-Parametern der ausgewählten Selfie-Fotovorlagen (180) auf bestimmte Höhen und bestimmte Winkel fliegt und die Kameraeinheit (12) so steuert, dass sie Fotos oder einen Film aufnimmt.

14. Durchführungsverfahren des Selfie-Drohnensystems (1) nach Anspruch 9, wobei die Auswahleinheit (14) mehrere Selfie- Fotoschablone (180) aus der Datenbank (18) auswählt und eine Zeitdauer für jede der ausgewählten Selfie-Fotoschablone (180) einstellt, und die Steuereinheit (16) den Selfie-Drohnenkörper (1) so steuert, dass er entsprechend den Selfie-Parametern der ausgewählten Selfie- Fotoschablone (180) und der Zeitdauer jeder der ausgewählten Selfie- Fotoschablone (180) zu bestimmten Höhen und bestimmten Winkeln fliegt, die Kameraeinheit (16) so steuert, dass sie Filme aufnimmt, und die den ausgewählten Selfie- Fotoschablone (180) entsprechenden Filme zu einem neuen Film kombiniert.

## Revendications

1. Système de drone à selfie (1), comprenant :
un corps de drone à selfie (10) ;
une base de données (18) ;
une unité de caméra (12) disposée dans le corps de drone à selfie (10) ;
une unité de sélection (14) couplée électriquement à la base de données (18), la base de données (18) comprenant une pluralité de modèles de photo selfie (180), l'unité de sélection (14) étant utilisée pour sélectionner au moins l'un des modèles de photo selfie (180) depuis la base de données (18), chacun des modèles de photo selfie (180) comprenant une pluralité de paramètres de selfie et les paramètres de selfie comprenant une position et une taille d'au moins un motif dans le modèle de photo selfie (180) correspondant ; et
une unité de commande (16) couplée électriquement à l'unité de caméra (12) et à l'unité de sélection (14) et utilisée pour recevoir les paramètres de selfie de l'au moins un des modèles de photo selfie (180) sélectionné par l'unité de sélection (14), commander le corps de drone à selfie (10) sur la base des paramètres de selfie par l'application de techniques d'asservissement à base d'image pour voler à une hauteur spécifique et à un angle spécifique de sorte qu'une position et une taille d'une personne de selfie prise dans une photo ou un film soient les mêmes que la position et la taille de l'au moins un motif dans le modèle de photo selfie (180) correspondant, et commander à l'unité de caméra (12) de prendre la photo ou de tourner le film,
dans lequel l'unité de sélection (14) est en outre utilisée pour sélectionner plusieurs modèles de photo selfie (180) depuis la base de données (18), et l'unité de commande (16) est en outre utilisée pour régler des priorités de séquence des modèles de photo selfie (180) sélectionnés, commander au corps de drone à selfie (10) de voler à des hauteurs spécifiques et à des angles spécifiques concordant avec les paramètres de selfie des modèles de photo selfie (180) sélectionnés en fonction des priorités de séquence et des paramètres de selfie des modèles de photo selfie (180) sélectionnés, et commander à l'unité de caméra (12) de prendre des photos ou de tourner un film, dans lequel les priorités de séquence sont réglées en fonction d'un plan de vol ayant la plus courte distance estimée du corps de drone à selfie (10).

2. Système de drone à selfie (1) selon la revendication 1, dans lequel les paramètres de selfie de chacun des modèles de photo selfie (180) comprennent un angle d'orientation d'un motif de portrait dans le modèle de photo selfie (180) correspondant.

3. Système de drone à selfie (1) selon la revendication 1, dans lequel, lorsque le modèle de photo selfie (180) sélectionné par l'unité de sélection (14) est un modèle à plusieurs personnes, l'unité de commande (16) est en outre utilisée pour déterminer la personne de selfie par la reconnaissance d'une action de la personne de selfie et commander à une image de la personne de selfie d'être affichée à une position spécifique d'une photo prise en fonction des paramètres de selfie du modèle à plusieurs personnes.

4. Système de drone à selfie (1) selon la revendication 1, dans lequel au moins l'un des modèles de photo selfie (180) est créé par la conversion d'une photo qui est chargée dans le système de drone à selfie (1), et l'au moins un modèle de photo selfie (180) créé est stocké dans la base de données (18).

5. Système de drone à selfie (1) selon la revendication 1, dans lequel les modèles de photo selfie (180) sont stockés dans un terminal mobile.

6. Système de drone à selfie (1) selon la revendication 1, dans lequel les modèles de photo selfie (180) sont stockés dans l'unité de commande (16).

7. Système de drone à selfie (1) selon la revendication 1, dans lequel l'unité de sélection (14) est en outre utilisée pour sélectionner plusieurs modèles de photo selfie (180) depuis la base de données (18), et l'unité de commande (16) est en outre utilisée pour commander au corps de drone à selfie (10) de voler à des hauteurs spécifiques et à des angles spécifiques concordant avec les paramètres de selfie des modèles de photo selfie (180) sélectionnés en fonction d'une séquence de sélection des modèles de photo selfie (180) sélectionnés et des paramètres de selfie des modèles de photo selfie (180) sélectionnés, et commander à l'unité de caméra (12) de prendre des photos ou de tourner un film.

8. Système de drone à selfie (1) selon la revendication 1, dans lequel l'unité de sélection (14) est en outre utilisée pour sélectionner plusieurs modèles de photo selfie (180) depuis la base de données (18) et régler une durée de chacun des modèles de photo selfie (180) sélectionnés, et l'unité de commande (16) est en outre utilisée pour commander au corps de drone à selfie (10) de voler à des hauteurs spécifiques et à des angles spécifiques concordant avec les paramètres de selfie des modèles de photo selfie (180) sélectionnés en fonction des paramètres de selfie des modèles de photo selfie (180) sélectionnés et de la durée de chacun des modèles de photo selfie (180) sélectionnés, commander à l'unité de caméra (12) de tourner des films, et combiner les films correspondant aux modèles de photo selfie (180) sélectionnés dans un nouveau film.

9. Procédé de réalisation d'un système de drone à selfie (1), le système de drone à selfie (1) comprenant un corps de drone à selfie (10), une base de données (18), une unité de caméra (12), une unité de sélection (14) et une unité de commande (16), le procédé de réalisation du système de drone à selfie (1) comprenant :
la sélection d'au moins l'un d'une pluralité de modèles de photo selfie (180) depuis la base de données (18) par l'unité de sélection (14), chacun des modèles de photo selfie (180) comprenant une pluralité de paramètres de selfie, et les paramètres de selfie comprenant une position et une taille d'au moins un motif dans le modèle de photo selfie (180) correspondant ;
la réception des paramètres de selfie de l'au moins un des modèles de photo selfie (180) par l'unité de commande (16) ; et
la commande du corps de drone à selfie (10) sur la base des paramètres de selfie par l'application de techniques d'asservissement à base d'image pour voler à une hauteur spécifique et à un angle spécifique par l'unité de commande (16) de sorte qu'une position et une taille d'une personne de selfie prise dans une photo ou un film soient les mêmes que la position et la taille de l'au moins un motif dans le modèle de photo selfie (180) correspondant, et la commande à l'unité de caméra (12) de prendre la photo ou de tourner le film,
dans lequel le procédé de réalisation du système de drone à selfie (1) comprend en outre :
la sélection, par l'unité de sélection (14), de plusieurs modèles de photo selfie (180) depuis la base de données (18) ;
le réglage, par l'unité de commande (16), de priorités de séquence des modèles de photo selfie (180) sélectionnés ;
la commande, par l'unité de commande (16), au corps de drone à selfie (10) de voler à des hauteurs spécifiques et à des angles spécifiques concordant avec les paramètres de selfie des modèles de photo selfie (180) sélectionnés en fonction des priorités de séquence et des paramètres de selfie des modèles de photo selfie (180) sélectionnés ; et
la commande, par l'unité de commande (16), à l'unité de caméra (12) de prendre des photos ou de tourner un film, dans lequel les priorités de séquence sont réglées en fonction d'un plan de vol ayant la plus courte distance estimée du corps de drone à selfie (10).

10. Procédé de réalisation du système de drone à selfie (1) selon la revendication 9, dans lequel les paramètres de selfie de chacun des modèles de photo selfie (180) comprend un angle d'orientation d'un motif de portrait dans le modèle de photo selfie (180) correspondant.

11. Procédé de réalisation du système de drone à selfie (1) selon la revendication 9, dans lequel, lorsque le modèle de photo selfie (180) sélectionné par l'unité de sélection (14) est un modèle à plusieurs personnes, l'unité de commande (16) détermine la personne de selfie par la reconnaissance d'une action de la personne de selfie et commande à une image de la personne de selfie d'être affichée à une position spécifique d'une photo prise en fonction des paramètres de selfie du modèle à plusieurs personnes.

12. Procédé de réalisation du système de drone à selfie (1) selon la revendication 9, dans lequel au moins l'un des modèles de photo selfie (180) est créé par la conversion d'une photo qui est chargée dans le système de drone à selfie (1), et l'au moins un modèle de photo selfie (180) créé est stocké dans la base de données (18).

13. Procédé de réalisation du système de drone à selfie (1) selon la revendication 9, dans lequel l'unité de sélection (14) sélectionne plusieurs modèles de photo selfie (180) depuis la base de données (18), et l'unité de commande (16) commande au corps de drone à selfie (1) de voler à des hauteurs spécifiques et à des angles spécifiques concordant avec les paramètres de selfie des modèles de photo selfie (180) sélectionnés en fonction d'une séquence de sélection des modèles de photo selfie (180) sélectionnés et des paramètres de selfie des modèles de photo selfie (180) sélectionnés, et commande à l'unité de caméra (12) de prendre des photos ou de tourner un film.

14. Procédé de réalisation du système de drone à selfie (1) selon la revendication 9, dans lequel l'unité de sélection (14) sélectionne plusieurs modèles de photo selfie (180) depuis la base de données (18) et règle une durée de chacun des modèles de photo selfie (180) sélectionnés, et l'unité de commande (16) commande au corps de drone à selfie (1) de voler à des hauteurs spécifiques et à des angles spécifiques concordant avec les paramètres de selfie des modèles de photo selfie (180) sélectionnés en fonction des paramètres de selfie des modèles de photo selfie (180) sélectionnés et de la durée de chacun des modèles de photo selfie (180) sélectionnés, commande à l'unité de caméra (16) de tourner des films, et combine les films correspondant aux modèles de photo selfie (180) sélectionnés dans un nouveau film.
